# EUROPEAN PATENT APPLICATION

(11) **EP 4 343 752 A1**
(43) Date of publication of application: **27.03.2024**
(21) Application number: 22804631.4
(22) Date of filing: 16.05.2022
(51) Int. Cl.: G10H 1/34

(54) **DETECTION SYSTEM FOR MUSICAL INSTRUMENT, AND MUSICAL INSTRUMENT**

(30) Priority: 18.05.2021 JP 2021083888
(71) Applicant: YAMAHA CORPORATION, Hamamatsu-shi, Shizuoka 430-8650 (JP)
(72) Inventor: ISHII, Jun, Hamamatsu-shi, Shizuoka 430-8650 (JP)
(74) Representative: Kehl, Ascherl, Liebhoff & Ettmayr Patentanwälte Partnerschaft mbB
(86) International application number: PCT/JP2022/020348
(87) International publication number: WO 2022/244720

(57) **Abstract**

A detection system includes a detectable member disposed on a movable member that is configured to be displaced in response to a user operation in playing a piece of music, and a signal generator including a first coil configured to generate a magnetic field, the signal generator being configured to generate a detection signal dependent on a distance between the detectable member and the first coil, in which the detectable member includes a flexible base fixed to the movable member, and a second coil disposed on the base.

## Description

### TECHNICAL FIELD

The present disclosure relates to techniques for detecting displacement of a movable member.

### BACKGROUND ART

There have been proposed a variety of techniques for detecting displacement of a movable member responsive to a user operation in playing a piece of music. For example, Patent Document 1 discloses a detection system that includes an active resonant circuit, which is disposed on a body of a musical keyboard instrument having a plurality of keys, and a passive resonant circuit, which is disposed on each of the plurality of keys. The active resonant circuit includes a coil configured to generate a magnetic field in response to a supplied periodic signal, and the active resonant circuit is configured to generate a detection signal dependent on a distance between the coil and a coil of the passive resonant circuit.

### Related Art Document

### Patent Document

Patent Document 1: International Publication No. 2019/122867

### SUMMARY OF THE INVENTION

### Problems to be solved by the Invention

However, the coil of the passive resonant circuit is disposed on a rigid base, which makes it difficult to reduce a space for installation of the base. Furthermore, a weight of the rigid base on which the passive resonant circuit is disposed may influence displacement of the movable member. In view of the circumstances described above, an object of one aspect of the present disclosure is to reduce a weight of a detectable member for use in detecting a user operation and to reduce a space required for installation of the detectable member.

### Means for solving the Problems

To solve the problems described above, a detection system for a musical instrument according to one aspect of the present disclosure includes: a detectable member disposed on a movable member that is configured to be displaced in response to a user operation in playing a piece of music; and a signal generator including a first coil configured to generate a magnetic field, the signal generator being configured to generate a detection signal dependent on a distance between the detectable member and the first coil, in which the detectable member includes: a flexible base fixed to the movable member; and a second coil disposed on the base.

A musical instrument according to another aspect of the present disclosure includes: a movable member that is configured to be displaced in response to a user operation in playing a piece of music; a detectable member disposed on the movable member; and a signal generator including a first coil configured to generate a magnetic field, the signal generator being configured to generate a detection signal dependent on a distance between the detectable member and the first coil, in which the detectable member includes: a flexible base fixed to the movable member; and a second coil disposed on the base.

### BRIEF DESCRIPTION OF THE DRAWINGS

Fig. 1 is a block diagram showing a configuration of a musical keyboard instrument according to a first embodiment.
Fig. 2 is a side view of a configuration of a keyboard mechanism.
Fig. 3 is a perspective view of a configuration of a hammer.
Fig. 4 is a block diagram showing a configuration of a detection system and a configuration of a control system.
Fig. 5 is a circuit diagram showing an electrical configuration of a magnetic sensor.
Fig. 6 is a block diagram showing a configuration of a drive circuit.
Fig. 7 is a plan view of a configuration of a signal generator.
Fig. 8 is a cross section taken along line a-a in Fig. 7.
Fig. 9 is an explanatory diagram showing a magnetic field generated around the signal generator.
Fig. 10 is a plan view showing a configuration of a detectable member.
Fig. 11 is a cross section taken along line b-b in Fig. 10.
Fig. 12 is a plan view of conductive patterns included in the detectable member.
Fig. 13 is an explanatory diagram showing a magnetic field generated around the detectable member.
Fig. 14 is a cross section of a hammer shank.
Fig. 15 is a plan view of a configuration of the detectable member according to a second embodiment. Fig. 16 is a cross section taken along line c-c in Fig. 15.
Fig. 17 is a perspective view of a configuration of the hammer according to the second embodiment.
Fig. 18 is a cross section of the hammer shank according to the second embodiment.
Fig. 19 is an explanatory diagram showing an effect according to the second embodiment.
Fig. 20 is a side view of a configuration of a pedal mechanism according to a third embodiment.
Fig. 21 is a side view of a configuration of a pedal mechanism according to a modification of the third embodiment.
Fig. 22 is a side view of a configuration of the keyboard mechanism according to a fourth embodiment.
Fig. 23 is a cross section of the hammer shank according to a modification.
Fig. 24 is a cross section of the hammer shank according to the modification.
Fig. 25 is a cross section of the movable member according to another modification.
Fig. 26 is a cross section of the movable member according to yet another modification.
Fig. 27 is a cross section of the movable member according to yet another modification.
Fig. 28 is a perspective view of a configuration of the hammer according to yet another modification.
Fig. 29 is an explanatory diagram showing a position where the detectable member is disposed according to yet another modification.
Fig. 30 is an explanatory diagram of the signal generator and the detectable member according to yet another modification.

### MODES FOR CARRYING OUT THE INVENTION

### A: First Embodiment

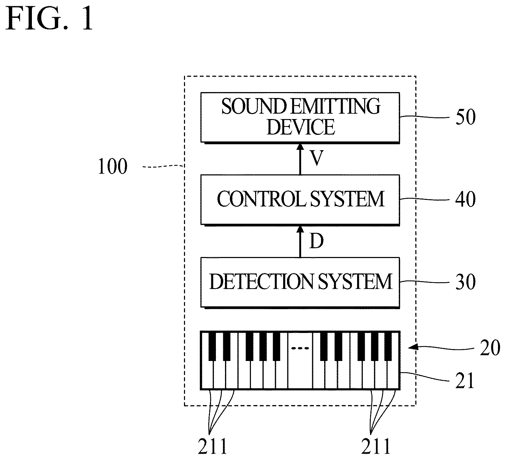

Fig. 1 is a block diagram showing a configuration of a musical keyboard instrument 100 according to a first embodiment of the present disclosure. The musical keyboard instrument 100 is a musical instrument used by a user to play a piece of music, and includes a keyboard mechanism 20, a detection system 30, a control system 40, and a sound emitting device 50.

The keyboard mechanism 20 includes a keyboard 21. The keyboard 21 includes a plurality of keys 211 that include a plurality of white keys and a plurality of black keys. Each of the plurality of keys 211 is an operable playing element that is configured to be displaced in response to a user operation in playing a piece of music. The user operation is a playing operation that includes depression of a key and release of a key. The detection system 30 detects the user operation. The detection system 30 is an example of a "detection system for a musical instrument." The control system 40 generates play data dependent on a result of the detection by the detection system 30. The play data is time series data indicative of the user operation in playing the piece of music.

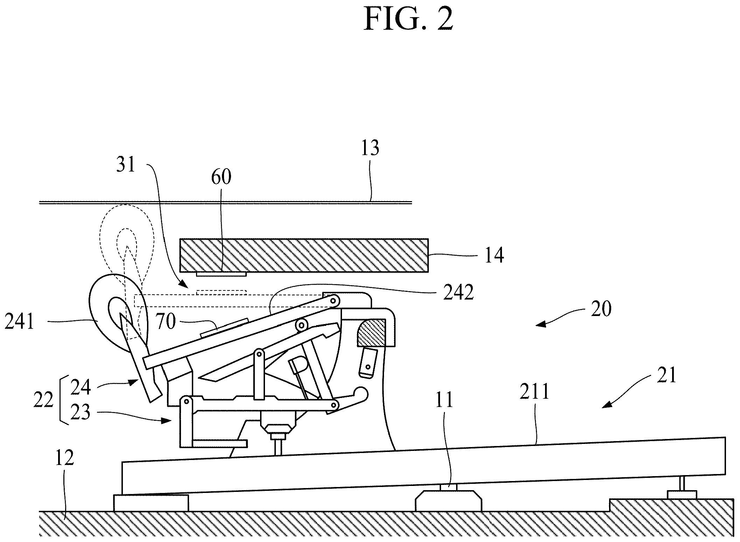

Fig. 2 is a side view of a specific configuration of the keyboard mechanism 20. Fig. 2 mainly shows a configuration of a key 211 of the keyboard 21. Each of the plurality of keys 211 of the keyboard 21 is supported by a support 12, with a supporting portion (balance pin) 11 that acts as a fulcrum. The support 12 is a structure (frame) that supports each element of the musical keyboard instrument 100. Each of the plurality of keys 211 has a tip portion that is configured to be vertically displaced in response to a user depression of a key and a user release of a key. The keyboard mechanism 20 includes, for each of the plurality of keys 211, a string 13 and a strike mechanism 22. The strike mechanism 22 is an action mechanism configured to strike the string 13 in response to displacement of the key 211. A corresponding string 13 is provided for each of a pitch. The strike mechanism 22 includes a transmission mechanism 23 and a hammer 24.

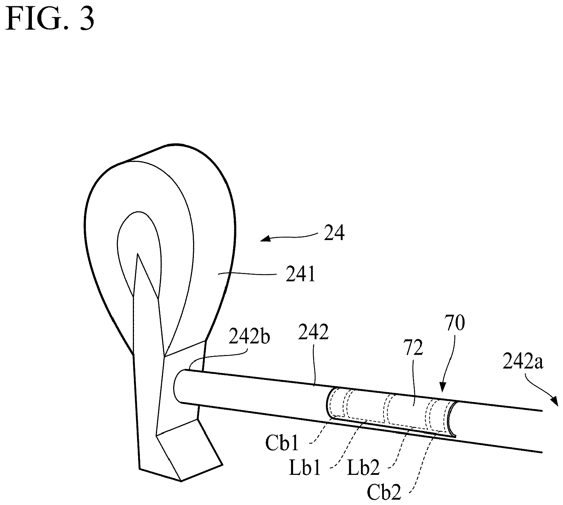

Fig. 3 is a perspective view of a configuration of the hammer 24. As shown in Fig. 2 and Fig. 3, the hammer 24 includes a hammer head 241 and a hammer shank 242. The hammer shank 242 is an elongated structure that has an end 242a and an end 242b. The end 242a is pivotally supported by the transmission mechanism 23. The end 242b is fixed to the hammer head 241. The hammer shank 242 according to the first embodiment is a shaft member that has a curved outer peripheral surface. In the first embodiment, the hammer shank 242 has a cylindrical shape.

In Fig. 2, the transmission mechanism 23 rotates the hammer 24 upon displacement of the key 211 responsive to a user operation in playing a piece of music. The transmission mechanism 23 includes mechanical elements, for example, a wippen, a jack, and a repetition lever, etc. As depicted by the dashed line in Fig. 2, the transmission mechanism 23 rotates the hammer shank 242 in response to displacement of the key 211 to cause the hammer head 241 to strike the string 13. In other words, the hammer 24 moves within a range between a stationary position depicted by the solid line in Fig. 2 and a strike position depicted by the dashed line in Fig. 2. The stationary position is a position at which the hammer 24 is located when the hammer shank 242 is in contact with a stopper disposed under the hammer shank 242. The strike position is a position at which the hammer 24 is located when the hammer head 241 strikes the string 13. As will be understood from the above description, the hammer shank 242 (hammer 24) is a movable member that rotates in response to user depression of the key.

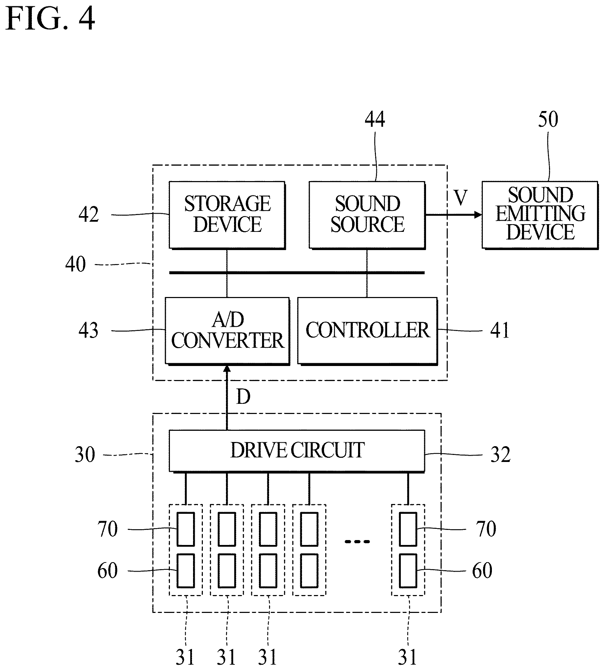

Fig. 4 is a block diagram showing a configuration of the detection system 30 and a configuration of the control system 40. The detection system 30 includes a plurality of magnetic sensors 31 corresponding to different hammers 24, and a drive circuit 32 configured to drive each of the plurality of magnetic sensors 31. The magnetic sensor 31 corresponding to each of the hammers 24 is a sensor configured to detect a position of a corresponding hammer 24. Each of the plurality of magnetic sensors 31 includes a signal generator 60 and a detectable member 70. In other words, a combination of the signal generator 60 and the detectable member 70 is provided for each of the hammers 24.

As shown in Fig. 2 and Fig. 3, the detectable member 70 is installed in the hammer 24. More specifically, the detectable member 70 is disposed on the hammer shank 242. Thus, the detectable member 70 moves in response to a user operation of the key 211 in playing a piece of music. In contrast, the signal generator 60 is disposed on a support 14 included in the keyboard mechanism 20. The support 14 is a fixed structure provided over the strike mechanism 22. The signal generator 60 is disposed on a portion of the support 14 facing the hammer shank 242. Thus, the signal generator 60 does not move when a user operates the key 211.

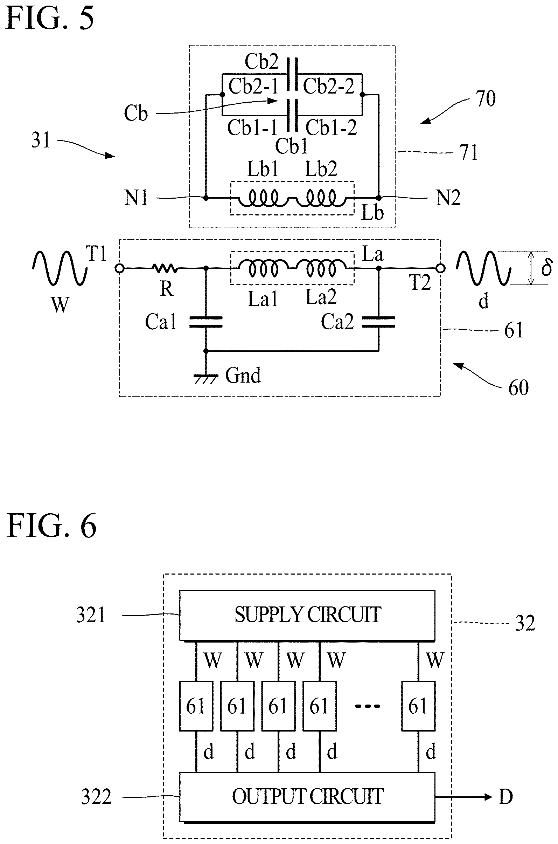

Fig. 5 is a circuit diagram showing an electrical configuration of a magnetic sensor 31. The signal generator 60 includes an active resonant circuit 61. The active resonant circuit 61 includes an input terminal T1, an output terminal T2, a resistive element R, a coil La, a capacitive element Cal, and a capacitive element Ca2. One end of the resistive element R is connected to the input terminal T1, and the other end is connected to one end of the capacitive element Ca1 and also to one end of the coil La. The other end of the coil La is connected to the output terminal T2 and also to one end of the capacitive element Ca2. The other end of the capacitive element Ca1 and the other end of the capacitive element Ca2 are grounded (Gnd). The coil La includes a first portion La1 and a second portion La2, which are connected in series to each other.

The detectable member 70 includes a passive resonant circuit 71. The passive resonant circuit 71 includes a capacitive element Cb and a coil Lb. The capacitive element Cb includes a capacitive element Cb1 and a capacitive element Cb2, which are connected in parallel to each other. The capacitive element Cb1 includes an electrode Cbl-1 and an electrode Cbl-2, whereas the capacitive element Cb2 includes an electrode Cb2-1 and an electrode Cb2-2. The electrode Cbl-1 of the capacitive element Cb1 and the electrode Cb2-1 of the capacitive element Cb2 are electrically connected to one end of the coil Lb at a connection point N1. The electrode Cb1-2 of the capacitive element Cb1 and the electrode Cb2-2 of the capacitive element Cb2 are electrically connected to the other end of the coil Lb at a connection point N2. The connection point N1 corresponds to one end of the coil Lb, whereas the connection point N2 corresponds to the other end of the coil Lb. The coil Lb includes a first portion Lb1 and a second portion Lb2, which are connected in series to each other. The capacitive element Cb2 may be constituted of one capacitive element. However, a configuration in which the capacitive element Cb is constituted of two capacitive elements (Cb1, Cb2) as in the first embodiment has an advantage in that it is easy to secure a capacitance of the capacitive element Cb. The capacitive element Cb may be constituted of three or more capacitive elements. In other words, as long as a requisite capacitance can be secured, a specific structure of the capacitive element Cb can be freely selected.

In the first embodiment, a resonance frequency of the active resonant circuit 61 and a resonant frequency of the passive resonant circuit 71 are set to be the same as each other. However, the resonance frequency of the active resonant circuit 61 and the resonant frequency of the passive resonant circuit 71 may be set to differ from each other. For example, the resonance frequency of the active resonant circuit 61 may be set to a frequency obtained by multiplying the resonance frequency of the passive resonant circuit 71 by a predetermined constant.

As described above, the signal generator 60 includes the coil La, whereas the detectable member 70 includes the coil Lb. The coil La and the coil Lb face each other and are spaced apart from each other. As shown in Fig. 2, a distance between the signal generator 60 and the detectable member 70 (specifically, a distance between the coil La and the coil Lb) varies dependent on a position of the hammer shank 242. The signal generator 60 and the detectable member 70 approach each other and move away from each other responsive to user key depression and user key release. In Fig. 4, the drive circuit 32 generates a detection signal D dependent on a distance between the coil La and the coil Lb. The coil La is an example of a first coil, whereas the coil Lb is an example of a second coil.

Fig. 6 is a block diagram showing a specific configuration of the drive circuit 32. The drive circuit 32 includes a supply circuit 321 and an output circuit 322. The supply circuit 321 supplies a reference signal W to the input terminal T1 of the active resonant circuit 61 included in each of the plurality of signal generators 60. For example, the supply circuit 321 is a demultiplexer configured to supply in time division the reference signal W to each of the plurality of signal generators 60. The reference signal W is a signal having a level that varies periodically. For example, the reference signal W may be a periodic signal having a freely selected waveform such as a sine wave or a square wave. The reference signal W has frequency sufficiently shorter than a duration of a period of time within which the reference signal W is supplied to a signal generator 60. The frequency of the reference signal W is set to a frequency substantially equal not only to the resonance frequency of the active resonant circuit 61, but also to the resonance frequency of the passive resonant circuit 71.

The reference signal W is supplied to the coil La via the input terminal T1 and the resistive element R. In response to the supplied reference signal W, the coil La generates a magnetic field. The magnetic field generated by the coil La generates electromagnetic induction such that an induced current is generated in the coil Lb of the detectable member 70. In other words, the coil Lb generates a magnetic field that cancels out a change in the magnetic field generated by the coil La. The magnetic field generated by the coil Lb varies dependent on a distance between the coil La and the coil Lb. Thus, the signal generator 60 outputs, from the output terminal T2, a detection signal d with an amplitude level δ that varies dependent on a distance between the coil La and the coil Lb. The detection signal d is a periodic signal a level of which varies at the same frequency as that of the reference signal W. As will be understood from the above description, the signal generator 60 generates the detection signal d dependent on a distance between the detectable member 70 and the coil La.

In Fig. 6, the output circuit 322 is a multiplexer configured to generate the detection signal D by aligning on a time axis respective detection signals d that are sequentially output from respective signal generators 60. In other words, the detection signal D is a signal with the amplitude level δ that varies dependent on a distance between the coil La and the coil Lb for each key 211. As described above, a distance between the coil La and the coil Lb depends on a position of the hammer 24, and the detection signal D is a signal that depends on a position of each of the plurality of hammers 24. The detection signal D generated by the output circuit 322 is supplied to the control system 40. The detection signal D may be rectified (half wave rectified or full wave rectified) and smoothed, and the rectified and smoothed detection signal D may then be supplied to the control system 40.

In Fig.4, the control system 40 generates the play data by analyzing the detection signal D supplied by the drive circuit 32. The control system 40 is implemented by a computer system that includes a controller 41, a storage device 42, an A/D converter 43, and a sound source 44. The control system 40 may be constituted of a single integrated device or may be constituted of a plurality of separate devices. The control system 40 may be implemented by an electronic device included in the musical keyboard instrument 100 or may be implemented by an information device (for example, a smartphone or a tablet terminal) connected to the musical keyboard instrument 100 either by wire or wirelessly.

The controller 41 includes one or more processors that control each element of the musical keyboard instrument 100. Specifically, the controller 41 may be constituted of one or more types of processors such as a central processing unit (CPU), a sound processing unit (SPU), a digital signal processor (DSP), a field programmable gate array (FPGA), or an application specific integrated circuit (ASIC).

The storage device 42 includes one or more memories configured to store a program to be executed by the controller 41 and a variety of types of data to be used by the controller 41. The storage device 42 may be constituted of a known recording medium such as a magnetic recording medium or a semiconductor recording medium, for example. The storage device 42 may be constituted of a combination of different types of recording media. The storage device 42 may be a portable recording medium that is detachable from the musical keyboard instrument 100, or alternatively, the storage device 42 may be an external recording medium (for example, online storage) that is accessible by the musical keyboard instrument 100.

The AID converter 43 converts the detection signal D, which is supplied by the drive circuit 32, from an analog signal to a digital signal. The controller 41 analyzes the detection signal D after conversion by the A/D converter 43 to analyze a position of each of the plurality of hammers 24. The controller 41 generates the play data representative of a temporal change in the position of each of the plurality of hammers 24 to store the play data in the storage device 42. In this manner, playing of a piece of music by a user is recorded. The play data is time series data that specifies pitches played by the user and intensities (velocities) of playing. The playing intensity of each of the pitches is set to be dependent on a velocity of a change in position of the hammer shank 242.

The sound source 44 generates an audio signal V representative of audio indicated by the controller 41. The controller 41 provides the sound source 44 with an instruction indicative of audio corresponding to the play data stored in the storage device 42. Thus, the generated audio signal V is representative of audio that corresponds to prior playing by the user. Specifically, the sound source 44 generates the audio signal V corresponding to pitches and intensities specified by the play data. The controller 41 may execute the program stored in the storage device 42 to implement the functions of the sound source 44.

The sound emitting device 50 emits a sound represented by the audio signal V. The sound emitting device 50 comprises, for example, a loudspeaker or headphones. The sound emitting device 50 may be separate from the control system 40 or may be connected to the control system 40 either by wire or wirelessly.

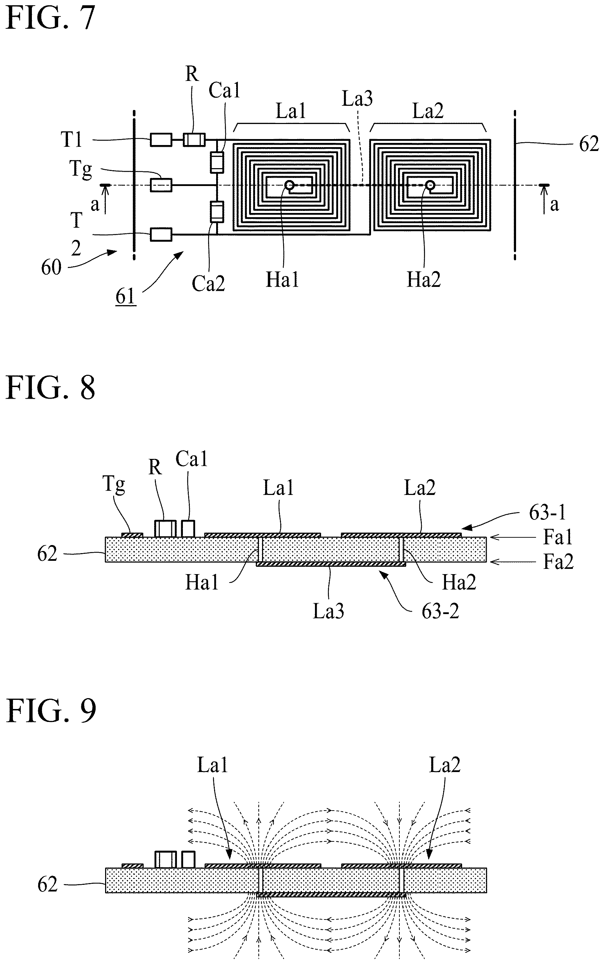

Fig. 7 is a plan view of a specific configuration of the signal generator 60 corresponding to a hammer 24. Fig. 7 is a plan view of the signal generator 60 viewed from the hammer 24 (specifically, viewed in an upward vertical direction). Fig. 8 is a cross section taken along line a-a in Fig. 7. In Fig. 7, a longitudinal direction corresponds to a direction in which the plurality of keys 211 are aligned with each other in the keyboard 21. In Fig. 7 and Fig. 8, a transverse direction corresponds to a longitudinal direction of each key 211.

The signal generator 60 is a circuit board that includes a base 62 on which the active resonant circuit 61 is disposed. The base 62 is a rigid insulating board with a surface Fal and a surface Fa2. The base 62 is elongated in shape and is continuous and extends over the plurality of keys 211. The surface Fal and the surface Fa2 are provided in opposing relation to each other. The surface Fal is a surface of the base 62 facing the detectable member 70. The surface Fa2 is a surface of the base 62 facing the support 14.

A conductive pattern 63-1 is disposed on the surface Fal of the base 62. For example, the conductive pattern 63-1 is formed by patterning a conductive film that covers the entire surface Fal. Similarly, a conductive pattern 63-2 is disposed on the surface Fa2 of the base 62. For example, the conductive pattern 63-2 may be formed by patterning a conductive film over the entire surface Fa2.

The conductive pattern 63-1 includes the first portion La1, the second portion La2, the input terminal T1, the output terminal T2, and a ground terminal Tg. As shown with reference to Fig. 5, the reference signal W is supplied to the input terminal T1, and the detection signal d is output from the output terminal T2. The ground terminal Tg is grounded.

As described above, the first portion La1 and the second portion La2 constitute the coil La of the active resonant circuit 61. The first portion La1 and the second portion La2 each have a rectangular spiral shape. The first portion La1 has a spiral in a direction that is the same that of the second portion La2. For example, the planar shape of each of the first portion La1 and the second portion La2 is a spiral that winds counterclockwise around its center and gradually recedes from the center. The first portion La1 and the second portion La2 are adjacent to each other. Specifically, the first portion La1 and the second portion La2 are aligned with each other along the longitudinal direction of the key 211.

As shown in Fig. 8, the conductive pattern 63-2 comprises a connection La3. The first portion La1 has a center portion electrically connected to one end of the connection La3 via a conductive hole Hal. The second portion La2 has a center portion electrically connected to the other end of the connection La3 via a conductive hole Ha2. The conductive holes Hal and Ha2 are through holes that pass through the base 62. As described above, the first portion La1 and the second portion La2 are electrically connected to each other via the connection La3. The coil La shown in Fig. 5 is constituted of the first portion La1, the second portion La2, and the connection La3.

The resistive element R, the capacitive element Ca1, and the capacitive element Ca2 are disposed on the surface Fal of the base 62. The resistive element R is an electronic component (a chip resistor) and is disposed on the base 62. The capacitive elements Ca1 and Ca2 are electronic components (chip capacitors), and are disposed on the base 62.

In response to a supplied current, the first portion La1 and the second portion La2 each generate a magnetic field. As will be understood from Fig. 7, a direction of a current flowing through the first portion La1 is opposite to a direction of a current flowing through the second portion La2. Thus, as shown in Fig. 9, a direction of a magnetic field generated by the first portion La1 is opposite to a direction of a magnetic field generated by the second portion La2. In other words, when the first portion La1 generates a magnetic field in a first direction, the second portion La2 generates a magnetic field in a second and opposite direction to the first direction. According to the above configuration, a magnetic field is generated in a direction from one of the first portion La1 and the second portion La2 toward the other of the first portion La1 and the second portion La2, thus reducing spread of the magnetic field across adjacent hammers 24. In other words, there is reduced interference between magnetic fields generated by two adjacent coils La. As a result, a generated detection signal D reflects a position of each of the plurality of hammers 24 with high accuracy.

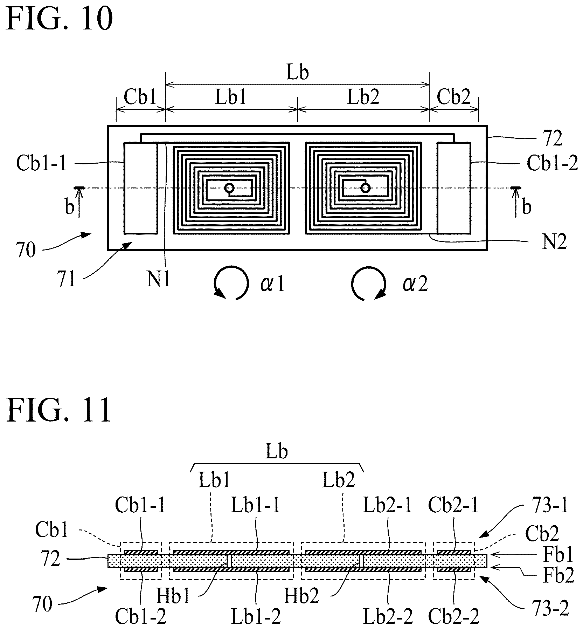

Fig. 10 is a plan view of a specific configuration of the detectable member 70 corresponding to a hammer 24. Fig. 10 is a plan view of the detectable member 70 viewed from the corresponding signal generator 60. Fig. 11 is a cross section taken along line b-b in Fig. 10.

The detectable member 70 is a circuit board that includes a base 72 on which the passive resonant circuit 71 is disposed. The base 72 is a flexible insulating base (film) and is elongated and rectangular in shape. Thus, in contrast to the base 62 of the signal generator 60, which is a rigid base, the base 72 of the detectable member 70 is a flexible deformable base that is able to curve or bend. The base 72 is formed as a sheet from a resin material such as polyimide or polyester, for example. In Fig. 10 and Fig. 11, for convenience of illustration the base 72 is shown in a flat state with no deformation.

The base 72 has a surface Fb1 and a surface Fb2. The surface Fb1 and the surface Fb2 are provided in opposing relation to each other. In a state in which the base 72 has no deformation, the surface Fb1 and the surface Fb2 are each planar. In the following explanation, for convenience a view in a direction perpendicular to the surface Fb1 of the base 72 that has no deformation is referred to as a "plan view."

The capacitive element Cb (Cb1, Cb2) and the coil Lb (first portion Lb1 and second portion Lb2) are disposed on the base 72. Specifically, in plan view the coil Lb is disposed between the capacitive element Cb1 and the capacitive element Cb2. The capacitive element Cb1 is disposed in a vicinity of one end of the base 72 and the capacitive element Cb2 is disposed in a vicinity of the other end of the base 72. As described above, the coil Lb includes the first portion Lb1 and the second portion Lb2. In plan view, the first portion Lb1 is disposed between the capacitive element Cb1 and the second portion Lb2, whereas the second portion Lb2 is disposed between the capacitive element Cb2 and the first portion Lb1. By employing a configuration in which the coil Lb is disposed between the capacitive element Cb1 and the capacitive element Cb2, an influence of the capacitive element Cb1 and the capacitive element Cb2 on a magnetic field generated by the coil Lb can be reduced compared to a configuration in which the capacitive element Cb1 and the capacitive element Cb2 are disposed between the first portion Lb1 and the second portion Lb2, for example.

A conductive pattern 73-1 is disposed on the surface Fb1 of the base 72. For example, the conductive pattern 73-1 is formed by patterning a conductive film over the entire surface Fb 1. Similarly, a conductive pattern 73-2 is disposed on the surface Fb2 of the base 72. For example, the conductive pattern 73-2 may be formed by patterning a conductive film over the entire surface Fb2. The conductive pattern 73 (73-1, 73-2) may be formed, for example, by patterning a conductive film on the base 72. However, a method for forming the conductive pattern 73 is not limited to the above example. For example, the conductive pattern 73 may be formed on the base 72 by use of a print technique such as ink jet printing.

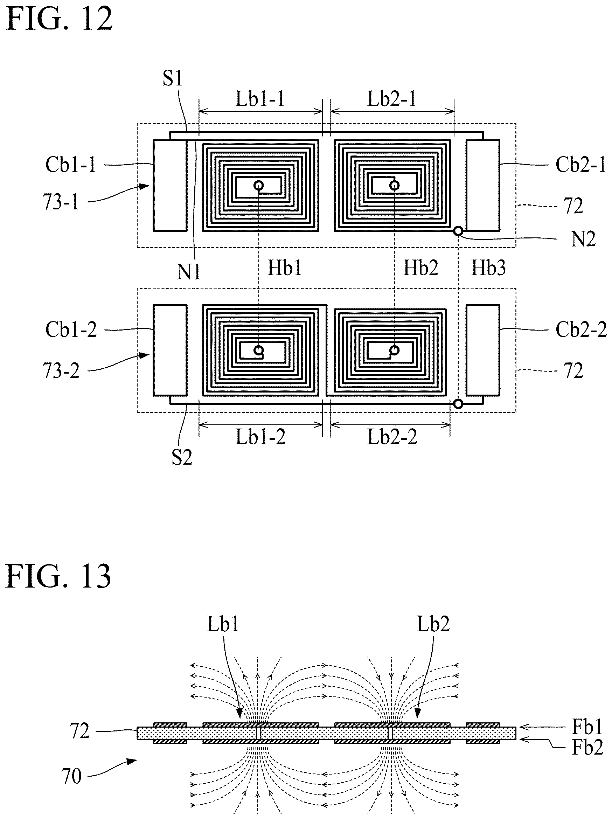

Fig. 12 is a plan view of each of the conductive patterns 73-1 and 73-2. The conductive pattern 73-1 includes a spiral line Lb1-1 of the first portion Lb1, a spiral line Lb2-1 of the second portion Lb2, the electrode Cb1-1 of the capacitive element Cb1, the electrode Cb2-1 of the capacitive element Cb2, and a line S1. In other words, the spiral line Lb1-1, the spiral line Lb2-1, the electrode Cbl-1, the electrode Cb2-1, and the line S1 are each formed together from a common layer by use of a same process.

In plan view, the spiral line Lb1-1 and the spiral line Lb2-1 are each rectangular in shape. Specifically, the spiral line Lb1-1 has a planar shape and winds around its center in a counterclockwise direction and gradually recedes from the center. Similarly, the spiral line Lb2-1 has a planar shape and winds around its center in a counterclockwise direction and gradually recedes from the center. In plan view, the electrode Cb1-1 and the electrode Cb2-1 have a rectangular shape. The electrode Cb1-1 is connected to the spiral line Lb1-1 at the connection point N1, whereas the electrode Cb2-1 is connected to the spiral line Lb2-1 at the connection point N2. The electrode Cb1-1 and the electrode Cb2-1 are electrically connected to each other via the line S1. The line S1 is a conductive line on the surface Fb1, and extends along a long side of the base 72.

The conductive pattern 73-2 includes a spiral line Lb1-2 of the first portion Lb1, a spiral line Lb2-2 of the second portion Lb2, the electrode Cb1-2 of the capacitive element Cb1, the electrode Cb2-2 of the capacitive element Cb2, and a line S2. In other words, the spiral line Lb1-2, the spiral line Lb2-2, the electrode Cbl-2, the electrode Cb2-2, and the line S2 are each formed together from a common layer by use of the same process.

In plan view, the spiral line Lb1-2 and the spiral line Lb2-2 each have a rectangular shape. Specifically, the spiral line Lb1-2 has a planar shape and winds around its center in a clockwise direction and gradually recedes from the center. Similarly, the spiral line Lb2-2 has a planar shape and winds around its center in a clockwise direction and gradually recedes from the center. In plan view, the electrode Cb1-2 and the electrode Cb2-2 each have a rectangular shape. The electrode Cb1-2 and the electrode Cb2-2 are electrically connected to each other via the line S2. The line S2 is a conductive line on the surface Fb2, and extends along the long side of the base 72.

In plan view, the spiral line Lbl-1 and the spiral line Lb1-2 are superposed on each other. The first portion Lb1 of the coil Lb is constituted of the spiral line Lbl-1 and the spiral line Lb1-2 electrically connected to each other via a conductive hole Hb1. In plan view, the spiral line Lb2-1 and the spiral line Lb2-2 are superposed on each other. The second portion Lb2 of the coil Lb is constituted of the spiral line Lb2-1 and the spiral line Lb2-2, which are electrically connected to each other via a conductive hole Hb2. A point between the spiral line Lb2-1 and the electrode Cb2-1 is electrically connected to the line S2 on the surface Fb2 via a conductive hole Hb3. Each conductive hole Hb (Hb1 to Hb3) is a through hole that passes through the base 72 from the surface Fb1 to the surface Fb2. As described above, the coil Lb is constituted of the conductive patterns 73 (73-1, 73-2) formed on the surfaces (Fb1, Fb2) of the base 72.

As will be understood from Fig. 10, a direction of a current flowing through the first portion Lb1 is opposite to a direction of the current flowing through the second portion Lb2. In other words, in a state in which a current flows through the first portion Lb1 in a direction α1, the current flows through the second portion Lb2 in a direction α2 opposite to the direction α1. Thus, as shown in Fig. 13, a direction of a magnetic field generated by the first portion Lb1 is opposite to that of a magnetic field generated by the second portion Lb2. According to the above configuration, a magnetic field is generated in a direction from one of the first portion Lb1 and the second portion Lb2 toward the other of the first portion Lb1 and the second portion Lb2, thus reducing spread of the magnetic field across adjacent hammers 24. In other words, there is reduced interference between magnetic fields generated by two adjacent hammers 24. As a result, a generated detection signal D reflects a position of each of the plurality of hammers 24 with high accuracy. The direction α1 is an example of a "first direction," whereas the direction α2 is an example of a "second direction."

As will be understood from Fig. 11 and Fig. 12, the electrode Cbl-1 and the electrode Cb1-2 face each other across the base 72. The capacitive element Cb1 is constituted of a laminated structure in which the insulating base 72 is interposed between the electrode Cb1-1 and the electrode Cb1-2. Similarly, the electrode Cb2-1 and the electrode Cb2-2 face each other across the base 72. The capacitive element Cb2 is constituted of a laminated structure in which the insulating base 72 is interposed between the electrode Cb2-1 and the electrode Cb2-2. As will be understood from the above description, each of the capacitive elements Cb1 and Cb2 is constituted of the conductive patterns 73 (73-1, 73-2) formed on the surfaces (Fb1, Fb2) of the base 72.

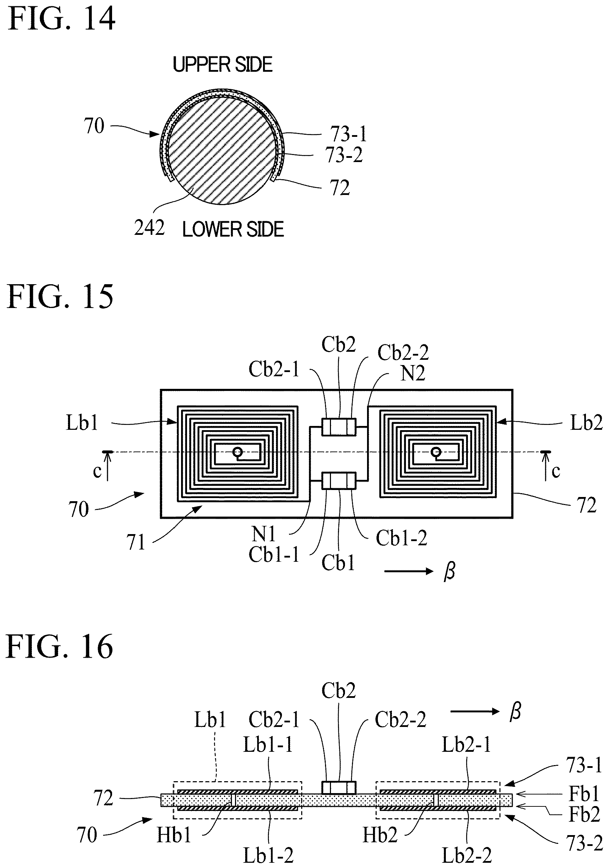

As described above with reference to Fig. 3, the foregoing detectable member 70 is disposed on the hammer shank 242. Fig. 14 is a cross section of a hammer shank 242 taken along a surface perpendicular to an axial direction of the hammer shank 242. As shown in Fig. 3 and Fig. 14, the detectable member 70 is disposed on the hammer shank 242 with the surface Fb2 of the base 72 facing the outer peripheral surface of the hammer shank 242. The detectable member 70 is bonded to the hammer shank 242 with an adhesive or with an adhesive sheet, for example. A method for disposing the detectable member 70 on the hammer shank 242 is not limited to the above example. For example, the detectable member 70 may be fixed to the hammer shank 242 by use of a fixing device such as a screw or a staple.

As shown in Fig. 3 and Fig. 14, the detectable member 70 is disposed on the hammer shank 242 with the base 72 being curved along the curved outer peripheral surface of the hammer shank 242. Specifically, the detectable member 70 is disposed on the hammer shank 242 with the base 72 being curved in the shape of an arcuate surface having substantially the same diameter as the hammer shank 242. In other words, the detectable member 70 is wound around a portion of the outer peripheral surface of the hammer shank 242, and the portion of the outer peripheral surface extends in a circumferential direction of the hammer shank 242, with one end thereof in the circumferential direction being apart from the other end thereof. The conductive pattern 73-1 and the conductive pattern 73-2 are curved together with the base 72 along the outer peripheral surface of the hammer shank 242. According to the above configuration, compared to a configuration in which a flat plate-shaped rigid base is disposed on the outer peripheral surface of the hammer shank 242, it is possible to stably and firmly fix the detectable member 70 to the hammer shank 242.

As will be understood from Fig. 3, the first portion Lb1 of the coil Lb and the second portion Lb2 of the coil Lb are aligned with each other along the axial direction (i.e., longitudinal direction) of the hammer shank 242. In other words, the first portion Lb1 of the coil Lb is disposed on a portion of the hammer shank 242 between the end 242b of the hammer shank 242 and the second portion Lb2, the end 242b being adjacent to the hammer head 241. The second portion Lb2 of the coil Lb is disposed on a portion of the hammer shank 242 between the end 242a of the hammer shank 242 and the first portion Lb1, the end 242a being positioned in opposing relation to the end adjacent to the hammer head 241. With the hammer 24 at the strike position, the first portion La1 of the coil La and the first portion Lb1 of the coil Lb face each other, and the second portion La2 of the coil La and the second portion Lb2 of the coil Lb face each other.

As described above, in the first embodiment, the coil Lb of the detectable member 70 is disposed on the flexible base 72. Thus, appropriate deformation (for example, curving) of the base 72 allows a reduction of a space required for installation of the detectable member 70 compared to a configuration in which the base 72 is rigid. It is difficult to secure a sufficient space around the strike mechanism 22 of the musical keyboard instrument 100 (especially around the hammer shank 242). Thus, the detection system 30 including the flexible base 72 according to the first embodiment enables a reduction in a space required for installation of the detectable member 70 and is particularly appropriate for the strike mechanism 22 of the musical keyboard instrument 100.

According to the configuration with the flexible base 72, it is possible to reduce a weight of the detectable member 70 compared to a configuration in which the base 72 is rigid. Thus, it is possible to reduce an influence of the weight of the detectable member 70 on movement of the hammer 24. More specifically, it is possible to reduce an inertial force of the hammer 24. As a result, for example, when a user repeatedly depresses keys within a short period of time (for example, repeat depression playing or trill playing) in playing a piece of music, the hammer 24 can be rotated in close coordination with the playing by the user.

In the first embodiment, the coil Lb is curved together with the base 72. Thus, compared to a configuration in which the base 72 has no deformation, characteristics of the magnetic field generated by the coil Lb (for example, an extent or direction of the magnetic field) vary depending on a degree of curvature. In other words, according to the first embodiment, an advantage is obtained in that options are increased for characteristics of the magnetic field generated by the coil Lb.

In the first embodiment, the coil Lb is constituted of the conductive patterns 73 (73-1, 73-2) disposed on the flexible base 72. Thus, it is easy to form the coil Lb compared to a configuration in which the coil Lb is formed of a spiral conductive line, for example. In addition, an advantage is obtained in that the coil Lb readily deforms together with the base 72. In the first embodiment, the electrodes (Cbl-1, Cbl-2, Cb2-1, Cb2-2) of the capacitive elements Cb (Cb1, Cb2) are constituted of the conductive patterns 73 (73-1, 73-2) disposed on the flexible base 72. Thus, each of the capacitive elements Cb (Cb1, Cb2) readily deforms together with the base 72. As a result, a likelihood of deformation of the base 72 imposing excess stress on the capacitive elements Cb (Cb1, Cb2) is greatly reduced.

In the first embodiment, the first portion Lb1 and the second portion Lb2 included in the coil Lb are aligned with each other along the longitudinal direction of the hammer shank 242. Thus, for example, compared to a configuration in which the first portion Lb1 and the second portion Lb2 are aligned with each other along the circumferential direction of the hammer shank 242, it is easy to sufficiently secure a space in which the coil Lb is disposed. The first portion Lb1 and the second portion Lb2 are aligned with each other along the longitudinal direction of the hammer shank 242, resulting in a reduction of spread of the magnetic field across adjacent hammers 24. Thus, the generated detection signal D can highly accurately reflect a position of each of the plurality of hammers 24. The first portion Lb1 and the second portion Lb2 may be aligned with each other along the circumferential direction of the hammer shank 242.

### B: Second Embodiment

A second embodiment will now be described. In the descriptions of the following embodiments, elements having the same functions as in the first embodiment are denoted by the same reference numerals used for like elements in the description of the first embodiment, and detailed description thereof is omitted, as appropriate.

Fig. 15 is a plan view of a specific configuration of the detectable member 70 in the second embodiment. Fig.16 is a cross section taken along line c-c in Fig. 15. As in the first embodiment, the detectable member 70 according to the second embodiment includes the flexible base 72 having the surface Fb1 and the surface Fb2. The conductive pattern 73-1 is disposed on the surface Fb1, whereas the conductive pattern 73-2 is disposed on the surface Fb2.

As shown in Fig. 16, the conductive pattern 73-1 includes the spiral line Lb1-1 of the first portion Lb1 and the spiral line Lb2-1 of the second portion Lb2. Each of the spiral lines Lb1-1 and Lb2-1 winds around its center in a counterclockwise direction and gradually recedes from the center, as in the first embodiment. The conductive pattern 73-2 includes the spiral line Lb1-2 of the first portion Lb1 and the spiral line Lb2-2 of the second portion Lb2. Each of the spiral lines Lb1- and Lb2-2 winds around its center in a clockwise direction and gradually recedes from the center, as in the first embodiment.

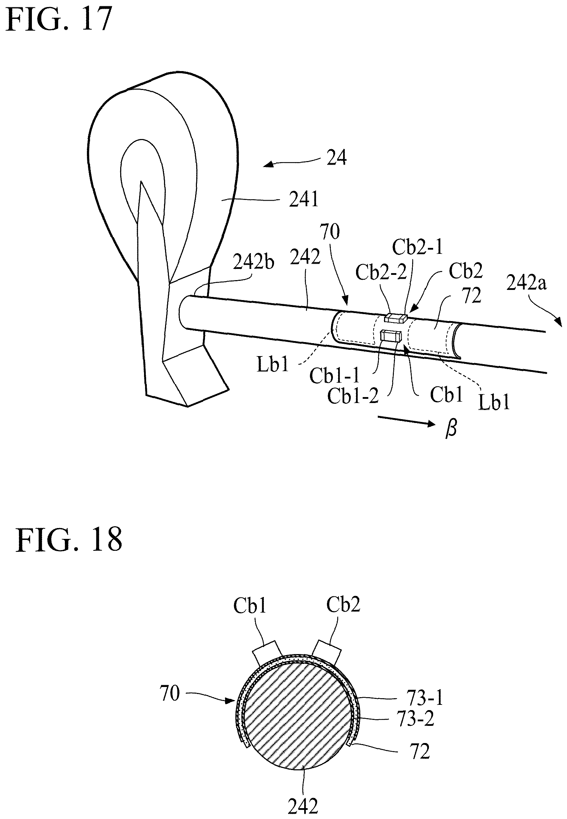

Fig. 17 is a perspective view of a configuration of a hammer 24 according to the second embodiment. Fig. 18 is a cross section of a hammer shank 242 according to the second embodiment. As described above, the capacitive element Cb1 and the capacitive element Cb2 according to the first embodiment are constituted of the conductive patterns 73 (73-1, 73-2) disposed on the base 72. The capacitive element Cb (Cb1, Cb2) according to the second embodiment comprises a chip capacitor disposed on the surface Fb1 of the base 72, as shown in Fig. 15 to Fig. 18. Thus, the conductive pattern 73-1 includes neither the electrode Cb1-1 nor the electrode Cb2-1, and the conductive pattern 73-2 includes neither the electrode Cb1-2 nor the electrode Cb2-2. The capacitive element Cb may be constituted of a single chip capacitor. Alternatively, the capacitive element Cb may be constituted of three or more chip capacitors. In other words, the capacitive element Cb may have a freely selected shape as long as a requisite capacitance is obtained.

The capacitive element Cb1 comprises an electronic component having the electrode Cbl-1 and the electrode Cbl-2. The electrode Cb1-1 and the electrode Cbl-2 are each bonded to the surface Fb1 of the base 72 by a bonding technique such as soldering. The capacitive element Cb1 has a rectangular planar shape that is elongated in a direction β in which the electrode Cb1-1 and the electrode Cb1-2 are aligned with each other. Similarly, the capacitive element Cb2 comprises an electronic component having the electrode Cb2-1 and the electrode Cb2-2. The electrode Cb2-1 and the electrode Cb2-2 are each bonded to the surface Fb1 of the base 72 by a bonding technique such as soldering. The capacitive element Cb2 has a rectangular planar shape that is elongated in a direction in which the electrode Cb2-1 and the electrode Cb2-2 are aligned with each other. As will be understood from the above description, the direction β is a longitudinal direction of each of the capacitive elements Cb (Cb1, Cb2).

As shown in Fig. 15 to Fig. 18, each of the capacitive elements Cb1 and Cb2 is disposed on the surface Fal of the base 72 such that the longitudinal direction β of the capacitive element Cb is along the axial direction of the hammer shank 242. The axial direction of the hammer shank 242 corresponds to the longitudinal direction of the hammer shank 242. The axial direction of the hammer shank 242 may be referred to as a direction of a central axis of a circle of curvature corresponding to the curvature of the base 72. The "central axis of the circle of curvature" means a central axis of a virtual cylinder in contact with an inner peripheral surface of the base 72. The capacitive element Cb1 and the capacitive element Cb2 are aligned with, and apart from, each other along the circumferential direction of the hammer shank 242. In other words, a position of the capacitive element Cb1 in the axial direction of the hammer shank 242 is the same as a position of the capacitive element Cb2 in the axial direction of the hammer shank 242.

The second embodiment provides the same effects as those provided by the first embodiment. In the second embodiment, the capacitive element Cb1 and the capacitive element Cb2 are each constituted of a chip capacitor. Thus, compared to the first embodiment in which the capacitive element Cb is constituted of the conductive patterns 73 (73-1, 73-2) disposed on the base 72, it is easy to obtain a requisite capacitance of the capacitive element Cb.

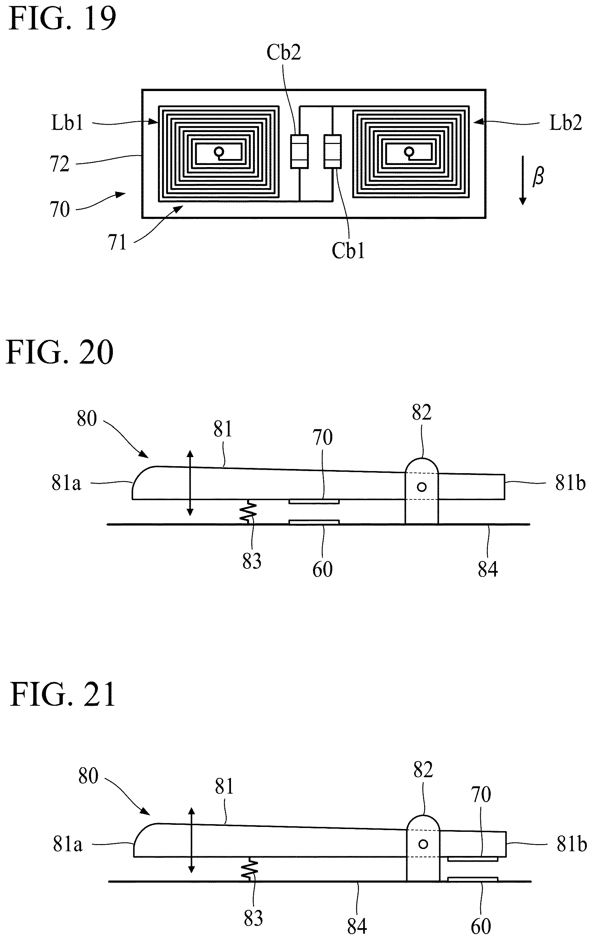

As a configuration in which the capacitive elements Cb are chip capacitors, the configuration shown in Fig. 19 is further assumed in which the capacitive elements Cb are disposed on the base 72 such that the longitudinal direction β of each of the capacitive elements Cb is perpendicular to the axial direction of the hammer shank 242. In other words, the capacitive elements Cb are disposed such that the longitudinal direction β of each of the capacitive elements Cb is along the circumferential direction of the hammer shank 242. In the configuration shown in Fig. 19, a problem occurs in that a large stress generated by curving of the base 72 acts on the capacitive elements Cb. According to the second embodiment, the longitudinal direction β of each of the capacitive elements Cb is along the axial direction of the hammer shank 242; thus, it is possible to reduce a possibility of excessive stress due to curving of the base 72 acting on the capacitive elements Cb compared to the configuration shown in Fig. 19. The configuration shown in Fig. 19 may be included in the present disclosure.

### C: Third Embodiment

In the first embodiment and the second embodiment, a configuration is described in which the detectable member 70 is disposed on the hammer 24. In a third embodiment, the musical keyboard instrument 100 includes a pedal mechanism 80 on which a magnetic sensor 31 of the detection system 30 is disposed. In the third embodiment, the detection system 30 detects a position of a pedal 81 that is configured to be displaced in response to a user operation in playing a piece of music.

Fig. 20 is a schematic diagram showing the pedal mechanism 80 of the musical keyboard instrument 100. The pedal mechanism 80 includes a pedal 81 for user operation, a support 82 supporting the pedal 81, an elastic member 83 configured to urge the pedal 81 upward in a vertical direction, and a support 84 disposed under the pedal 81. The pedal 81 is an elongated structure having a front end 81a and a rear end 81b, and the pedal 81 is an operable playing element that is operated in response to a user stepping operation (i.e., a user operation in playing a piece of music). The pedal 81 may be any of a damper pedal, a sostenuto pedal, or a soft pedal. Although the pedal mechanism 80 actually includes a plurality of pedals 81, for convenience of illustration only one pedal 81 is shown in Fig. 20.

In the above configuration, the detection system 30 detects displacement of the pedal 81. Specifically, a detectable member 70 is disposed on a bottom surface of the pedal 81. In contrast, a signal generator 60 is disposed on the support 84 to face the detectable member 70. Specifically, the detectable member 70 is disposed between a fulcrum of the pedal 81 formed by the support 82 and the front end 81a of the pedal 81. Thus, as the pedal 81 is depressed by the user, a distance between the signal generator 60 and the detectable member 70 is reduced. Specific configurations of the signal generator 60 and the detectable member 70 are the same as those according to the first embodiment.

In Fig 20, a configuration is described in which the detectable member 70 is disposed between the support 82 and the front end 81a of the pedal 81; however, as shown in Fig. 21, the detectable member 70 may be disposed between the support 82 and the rear end 81b of the pedal 81. The signal generator 60 is disposed on the support 84 to face the detectable member 70. In the configuration shown in Fig. 21, as the pedal 81 is depressed by the user, a distance between the signal generator 60 and the detectable member 70 is increased.

In Fig. 20 and Fig. 21, the pedal mechanism 80 of the musical keyboard instrument 100 is described; however, a pedal mechanism included in an electric musical instrument such as an electric stringed musical instrument (for example, an electric guitar) may have a configuration similar to the configuration shown in Fig. 20 or Fig. 21. The pedal mechanism included in an electric musical instrument may comprise an effect pedal for operation by a user in adjusting various sound effects such as distortion or compression.

### D: Fourth Embodiment

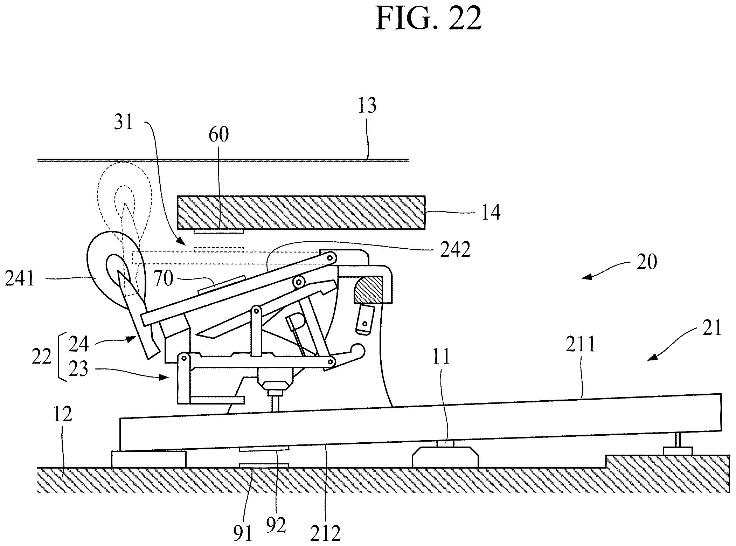

Fig. 22 is a side view of a configuration of the keyboard mechanism 20 according to a fourth embodiment. The keyboard mechanism 20 according to the fourth embodiment includes, for each of the plurality of keys 211, a signal generator 91 and a detectable member 92 in addition to elements similar to those of the first embodiment. The signal generator 91 is disposed on the support 12, whereas the detectable member 92 is disposed on a lower surface 212 of the key 211. The lower surface 212 of the key 211 is a flat surface.

The configuration of the signal generator 91 is the same as that of the signal generator 60 according to the first embodiment. The detectable member 92 is a circuit board that includes a base on which a passive resonant circuit 71 is disposed, as with the detectable member 70 according to the first embodiment. However, whereas the base 72 of the detectable member 70 according to the first embodiment is constituted of a flexible insulating base, the base of the detectable member 92 according to the fourth embodiment is constituted of a rigid insulating base. However, the base of the detectable member 92 may be constituted of a flexible insulating base.

As in the first embodiment, each signal generator 60 of the plurality of signal generators 60 generates the detection signal d having an amplitude level δ that is dependent on a distance between the signal generator 60 and the detectable member 70. The controller 41 generates the play data depending on the amplitude level δ of the detection signal d generated by each signal generator 60. Specifically, the controller 41 determines, depending on the amplitude level δ of the detection signal d, whether the key is depressed or released by a user. The fourth embodiment provides the same effects as those provided by the first embodiment. The configuration of the second embodiment may be applied to the fourth embodiment.

### E: Modifications

The following are examples of modifications of the embodiments described above. Two or more modifications freely selected from the following modifications may be combined as long as no conflict arises from such combination. In the following description, a member that is configured to be displaced in response to a user-made operation to play a piece of music may be referred to as a movable member 200 for convenience. The hammer shank 242 according to the first embodiment and to the second embodiment and the pedal 81 according to the third embodiment are examples of the movable member 200.

(1) In the first embodiment and the second embodiment, a configuration is described in which the detectable member 70 is disposed on the hammer shank 242, and in the third embodiment, a configuration is described in which the detectable member 70 is disposed on the pedal 81; however, the movable member 200 on which the detectable member 70 is disposed is not limited to the above examples. For example, the detectable member 70 may be disposed on a key 211 constituting the keyboard 21, the key 211 being the movable member 200.

In each of the foregoing embodiments, the musical keyboard instrument 100 is described; however, the detection system 30 according to the present disclosure may be applied to a freely selected type of musical instrument. For example, the detection system 30 may detect an operator operated by a user playing a wind instrument such as a woodwind instrument (for example, a clarinet or a saxophone) or a brass instrument (for example, a trumpet or a trombone).

As will be understood from the above examples, a target to be detected by the detection system 30 is comprehensively described as the movable member 200 that is configured to be displaced in response to a user operation (for example, an operation in playing a piece of music). The movable member 200 includes not only an operable playing element such as a key or a pedal 81 that is directly operated by to a user, but also an element such as a hammer 24, which is configured to be displaced in response to an operation of an operable playing element in playing a piece of music. However, the movable member 200 according to the present disclosure is not limited to a member that is configured to be displaced in response to a user operation in playing a piece of music. In other words, the movable member 200 is comprehensively described as a displaceable member regardless of a type of trigger used to generate displacement.

According to each of the foregoing embodiments, the detectable member 70 enables a reduction in weight compared to a configuration in which the base 72 is rigid; as a result, an influence of a weight of the detectable member 70 on movement of the movable member 200 is reduced as described above. From a viewpoint of utilizing the above effects, the detectable member 70 according to each of the foregoing embodiments is particularly effective for use in detecting displacement of the movable member 200 (for example, a hammer 24 or a key 211) that reciprocates repeatedly.

(2) In each of the foregoing embodiments, a configuration in which the detectable member 70 having the flexible base 72 is disposed on the movable member 200 (for example, a hammer shank 242 or a pedal 81) is not limited to the configuration described in each of the foregoing embodiments.

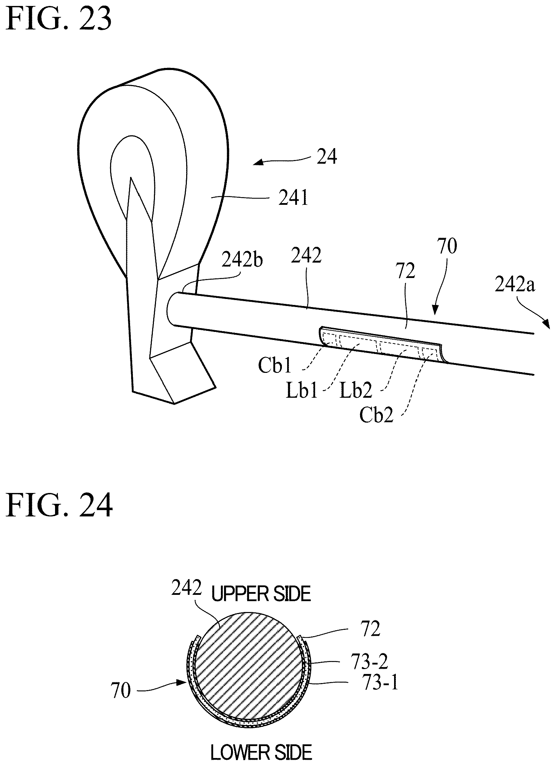

For example, in each of the foregoing embodiments, the detectable member 70 is disposed on an upper portion of the hammer shank 242 (in other words, on a portion of the hammer shank 242 close to the signal generator 60); however, as shown in Fig. 23 and Fig. 24, the detectable member 70 may be disposed on a lower portion of the hammer shank 242. In other words, the detectable member 70 may be disposed on a portion of the outer peripheral surface of the hammer shank 242, the portion of the outer peripheral surface being opposite to a portion of the outer peripheral surface facing the signal generator 60. The base 72 is curved along the outer peripheral surface of the hammer shank 242 while covering the lowest point in the cross section of the hammer shank 242. In Fig.23 and Fig.24, the capacitive elements Cb are depicted as constituted of the conductive patterns 73; however, the detectable member 70 according to the second embodiment in which the capacitive elements Cb (Cb1, Cb2) are constituted of the chip capacitors may be similarly disposed on the lower portion of the hammer shank 242.

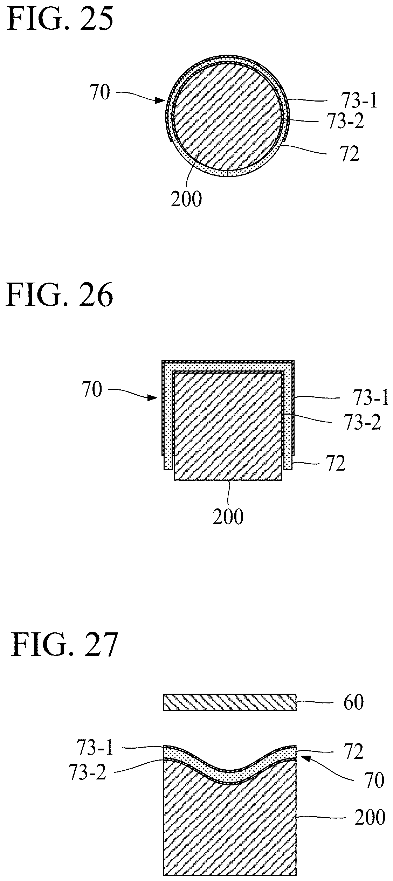

As shown in Fig. 25, which is a cross section of the movable member 200, the base 72 may be wound around an entire circumference of the movable member 200. In other words, the base 72 may be disposed in a cylindrical shape. Both ends of the base 72 may partly overlap with each other on a surface of the movable member 200.

In each of the foregoing embodiments, the detectable member 70 is disposed on the cylindrical movable member 200; however, as shown in Fig. 26, the detectable member 70 may be disposed on a movable member 200 having a prismatic shape. The base 72 of the detectable member 70 is bent along a plurality of corners of the movable member 200. For example, the base 72 has a plurality of regions respectively facing a plurality of sides of the movable member 200, and the base 72 is bent along a boundary of each of the plurality of regions such that the plurality of regions is in contact with the plurality of sides respectively. As will be understood from the above description, deformation of the base 72 is not limited to curvature such as a curved surface described in each of the foregoing embodiments and may include freely selected deformation such as bending.

In each of the foregoing embodiments, a configuration is described in which the base 72 of the detectable member 70 is convexly curved toward the signal generator 60 (coil La); however, as shown in Fig. 27, a configuration may be assumed in which the base 72 is concavely curved relative to the signal generator 60 (coil La).

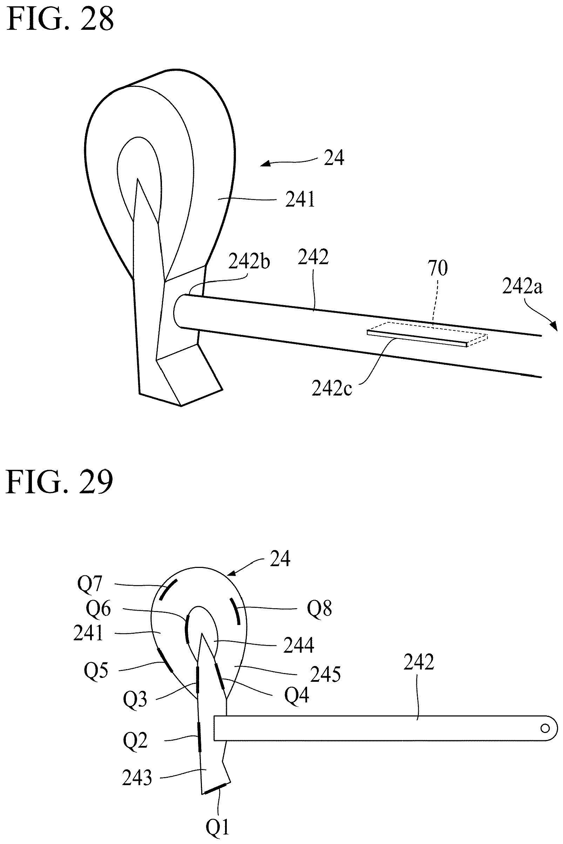

As shown in Fig. 28, the detectable member 70 may be embedded in the hammer shank 242. Specifically, the detectable member 70 is inserted into a slot 242c of the hammer shank 242. For example, the detectable member 70 may be embedded in the hammer shank 242 since the hammer shank 242 is formed of a rigid resin material.

In Fig. 29, other examples are depicted in which the detectable member 70 is disposed on a portion of the hammer 24. As shown in Fig. 29, the hammer head 241 includes an elongated hammer wood 243, a hammer lining felt 244 disposed at the tip of the hammer wood 243, and a hammer felt 245 covering the hammer lining felt 244.

As in aspects Q1 to Q4 shown in Fig. 29, the detectable member 70 may be disposed on the hammer wood 243. Specifically, in aspect Q1, the detectable member 70 is disposed on a rear end of the hammer wood 243. In aspect Q2, the detectable member 70 is disposed on an upper surface of the hammer wood 243. In aspect Q3 and aspect Q4, the detectable member 70 is disposed between the hammer wood 243 and the hammer felt 245.

As in aspects Q5 to Q8 shown in Fig. 29, the detectable member 70 may be disposed on or in the hammer felt 245. In aspect Q5, the detectable member 70 is disposed on an outer peripheral surface of the hammer felt 245. In aspect Q6, the detectable member 70 is disposed between the hammer lining felt 244 and the hammer felt 245. In aspect Q7 and aspect Q8, the detectable member 70 is embedded in the hammer felt 245. Specifically, the detectable member 70 is inserted into a slot of the hammer felt 245.

In the above description, a configuration is described in which the base 72 of the detectable member 70 is formed of a flexible film; however, depending on a position at which the detectable member 70 is disposed, the base 72 may be formed of a hard base (rigid base). In the above description, a configuration is described in which the coil Lb is disposed on the surface of the base 72; however, a configuration may be assumed in which the coil Lb of the detectable member 70 is wound around the hammer shank 242. For example, the coil Lb may be constituted of a conductive line winding around the hammer shank 242, or alternatively, the coil Lb may be constituted of a conductive pattern formed on the outer peripheral surface of the hammer shank 242 by use of a print technique such as ink jet printing.

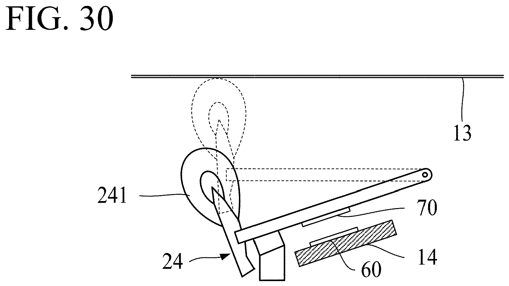

(3) In each of the foregoing embodiments, a configuration is described in which a distance between the coil La and the coil Lb decreases in response to depression of the key by a user; however, a relationship between a use operation and the distance between the coil La and the coil Lb is not limited to such a configuration. For example, in Fig. 30, a configuration is depicted in which a signal generator 60 is disposed under a hammer shank 242. In the configuration shown in Fig. 30, the coil La of the signal generator 60 and the coil Lb of the detectable member 70 are closest to each other when there is no user depression of the key, and the coil La and the coil Lb move away from each other in response to a user depression of the key.

(4) In each of the foregoing embodiments, a configuration is described in which the coil Lb includes the first portion Lb1 and the second portion Lb2; however, the coil Lb may be constituted of either the first portion Lb1 or the second portion Lb2. Similarly, the coil La may be constituted of either the first portion La1 and the second portion La2. In each of the foregoing embodiments, the coil Lb is constituted of the conductive patterns 73 (73-1, 73-2) on the base 72; however, a configuration of the coil Lb is not limited to the above example. For example, the coil Lb according to each of the foregoing embodiments may be a coil (for example, a chip coil) constituted of a conductive spiral line. Similarly, the coil La may be constituted of a conductive spiral line.

(5) In each of the foregoing embodiments, a configuration is described in which the detectable member 70 includes the conductive patterns 73 having two layers; however, the number of layers of the conductive patterns 73 may be freely selected. For example, the capacitive elements Cb (Cb1, Cb2) and the coil Lb may each be constituted of conductive patters 73 having three or more layers. The coil Lb may be constituted of a single layer.

(6) In the first embodiment, a configuration is described in which the coil Lb is disposed between the capacitive element Cb1 and the capacitive element Cb2; however, the capacitive element Cb1 and the capacitive element Cb2 that are constituted of the conductive patterns 73 (73-1, 73-2) may be disposed between the first portion Lb1 of the coil Lb and the second portion Lb2 of the coil Lb. The capacitive element Cb1 and the capacitive element Cb2 are aligned with each other in the circumferential direction of the hammer shank 242 or in the axial direction of the hammer shank 242, for example.

In the second embodiment, a configuration is described in which the capacitive element Cb1 and the capacitive element Cb2 are disposed between the first portion Lb1 of the coil Lb and the second portion Lb2 of the coil Lb; however, the coil Lb may be disposed between the capacitive element Cb1 constituted of a chip capacitor and the capacitive element Cb2 also constituted of a chip capacitor. The capacitive element Cb1 and the capacitive element Cb2 are aligned with each other in the circumferential direction of the hammer shank 242 or in the axial direction of the hammer shank 242, for example.

(7) In each of the foregoing embodiments, a musical keyboard instrument 100 is described that includes the string 13 as a sound source; however, the string 13 may be omitted. For example, the controller 41 not only generates the play data, but also supplies the play data to the sound source 44, which causes the sound emitting device 50 to emit a sound corresponding to playing of a piece of music by a user. In the configuration described above, the strike mechanism 22 does not strike a string but is used to impart the user's feeling of depression of the key closer to the user's feeling of depression of a natural musical instrument. In each of the foregoing embodiments, the musical keyboard instrument 100 is described in which the sound source 44 is included; however, the sound source 44 may be omitted. The strike mechanism 22 strikes the string 13 in response to playing of a piece of music by a user to emit a sound corresponding to the playing of the piece of music by the user. The detection system 30 is used to record play data indicative of the playing of the piece of music by the user.

The detection system 30 according to each of the foregoing embodiments is further used as an operation device configured to receive a user operation in playing a piece of music. The operation device may or may not include an element (for example, a sound source such as the sound source 44 or the string 13) configured to emit a sound. For example, an input device such as a musical instrument digital interface (MIDI) controller is an example of the operation device applied to the detection system 30. As will be understood from the above description, the detection system 30 is comprehensively described as a system configured to detect a user operation (especially a playing operation such as a key depression).

### F: Supplemental Notes

The following configurations are derivable from the foregoing embodiments.

A detection system according to one aspect (first aspect) of the present disclosure includes a detectable member disposed on a movable member that is configured to be displaced in response to a user operation in playing a piece of music; and a signal generator including a first coil configured to generate a magnetic field, the signal generator being configured to generate a detection signal dependent on a distance between the detectable member and the first coil, in which the detectable member includes: a flexible base fixed to the movable member; and a second coil disposed on the base. In this aspect, the second coil of the detectable member is disposed on the flexible base. Thus, appropriate deformation (for example, bending or curving) of the base allows a reduction in size of a space required for installation of the detectable member compared to a configuration in which the base is rigid. In addition, the detectable member allows a reduction in weight compared to a configuration in which the base is rigid. Thus, it is possible to reduce an influence of a weight of the detectable member on movement of the movable member.

In one aspect of the present disclosure, the base is fixed to the movable member with the base being deformed (for example, curved or bent). However, the detectable member need not be disposed with the base in a deformed state. For example, the base may be fixed to the movable member in a deformed state, and then disposed in an initial state (a non-deformed state).

A direction of displacement of the second coil relative to the first coil can be freely selected. For example, a configuration can be assumed in which the second coil moves along a winding axis of the second coil in response to displacement of the movable member, or alternatively, a configuration can be assumed in which the second coil moves along a direction that intersects the winding axis of the second coil in response to displacement of the movable member. In other words, a configuration can be assumed in which a distance (relative positional relationship) between the first coil and the second coil varies dependent on displacement of the movable member.

In the specific example (second aspect) of the first aspect, the detectable member is disposed on the movable member with the base being curved along a curved surface of the movable member. According to this aspect, compared to a configuration in which a rigid base having a flat plate shape is disposed on a curved surface of the movable member, it is possible to stably and firmly fix the detectable member to the movable member.

A direction of the curved base can be freely selected. For example, a configuration can be assumed in which the base is convexly curved toward the first coil, or alternatively, a configuration can be assumed in which the base is concavely curved relative to the first coil. For example, assuming the movable member is cylindrical, the base is convexly curved toward the first coil in a configuration in which the detectable member is disposed on a portion of an outer peripheral surface of the movable member, the portion of the outer peripheral surface facing the first coil. In contrast, the base is concavely curved relative to the first coil in a configuration in which the detectable member is disposed on a portion of the outer peripheral surface of the movable member, the portion of the outer peripheral surface being opposite to the portion of the outer peripheral surface facing the first coil.

"Curving" of the base means a state in which an initially planar base is deformed into a curved shape. In the above aspect, a configuration is described in which the based is curved; however, deformation of the base is not limited to the above example. For example, a configuration can be assumed in which the detectable member is disposed on a surface of an edge of the movable member, the movable member having a first surface and a second surface that meet at the edge. In the above configuration, the base is bent along a straight boundary line between the first surface and the second surface such that not only a first portion of the base is in contact with or faces the first surface, but a second portion of the base also is in contact with or faces the second surface.

In a specific example (third aspect) of the first or second aspect, the second coil comprises a conductive pattern on a surface of the base. According to this aspect, the second coil is constituted of the conductive pattern on the surface of the base; thus, it is easy to form the second coil compared to a configuration in which the second coil is constituted of a spiral conductive line, for example. In addition, the second coil can be readily deformed together with the base.

In a specific example (fourth aspect) of any of the first through third aspects, the second coil comprises: a first portion through which a current flows in a first direction; and a second portion through which the current flows in a second direction opposite to the first direction. According to this aspect, a direction of a magnetic field generated by the first portion of the second coil is opposite to a direction of a magnetic field generated by the second portion of the second coil. Thus, it is possible to reduce spread of the magnetic field from the second coil to the surroundings.

In a specific example (fifth aspect) of the fourth aspect, the movable member comprises an elongated member, and the first portion and the second portion are aligned with each other along a longitudinal direction of the movable member. According to this aspect, compared to a configuration in which the first portion and the second portion are aligned with each other along a circumferential direction of the movable member, it is easy to secure sufficient space to dispose the second coil.

In a specific example (sixth aspect) of the fifth aspect, the detectable member further comprises a first capacitive element and a second capacitive element, and the first capacitive element and the second capacitive element are connected to the second coil and are aligned with, and apart from, each other along the longitudinal direction of the movable member, and the first portion and the second portion are disposed between the first capacitive element and the second capacitive element. In this aspect, the first capacitive element, the first portion, the second portion, and the second capacitive element are aligned with each other along the longitudinal direction of the movable member. Thus, an advantage is obtained in that the detectable member can be readily disposed on the movable member.

In a specific example (seventh aspect) of any of the first through fifth aspects, the detectable member further comprises a capacitive element connected to the second coil, the capacitive element has an electrode that comprises a conductive pattern disposed on a surface of the base. According to this aspect, the electrode of the capacitive element is constituted of the conductive pattern disposed on the surface of the base. Thus, for example, compared to a configuration in which the capacitive element is constituted of a chip capacitor, it is possible to reduce a possibility of excessive stress generated by deformation of the base from acting on the capacitive element.

In a specific example (eighth aspect) of the second aspect, the movable member comprises an elongated member, and the detectable member further comprises a capacitive element connected to the second coil, and the capacitive element comprises a chip capacitor disposed on a surface of the base such that a longitudinal direction of the capacitive element is along a longitudinal direction of the movable member. According to this aspect, the capacitive element is constituted of a chip capacitor. Thus, compared to a configuration in which the electrode of the capacitive element is constituted of a conductive pattern disposed on the surface of the base, it is easy to obtain sufficient capacitance of the capacitive element. In addition, the capacitive element is disposed such that the longitudinal direction of the capacitive element is along a central axis of a circle of curvature corresponding to the curvature of the base. Thus, compared to a configuration in which the capacitive element is disposed such that the longitudinal direction of the capacitive element is along a circumferential direction of the circle of curvature, it is possible to reduce a possibility of excessive stress generated by curving of the base from acting on the capacitive element.

In a specific example (ninth aspect) of any of the first through eighth aspects, the movable member comprises a hammer shank configured to rotate in response to a user depression of a key. According to this aspect, it is possible to generate a detection signal representative of a position of the hammer shank. It is difficult to secure sufficient space around the strike mechanism of the musical keyboard instrument (especially around the hammer shank). Thus, this aspect according to the present disclosure, by which a space required for installation of the detectable member is reduced by inclusion of the flexible base, is particularly appropriate for the strike mechanism of the musical keyboard instrument.

A musical instrument according to one aspect (tenth aspect) of the present disclosure includes: a movable member that is configured to be displaced in response to a user operation in playing a piece of music; a detectable member disposed on the movable member; and a signal generator including a first coil configured to generate a magnetic field, the signal generator being configured to generate a detection signal dependent on a distance between the detectable member and the first coil, in which the detectable member comprises: a flexible base fixed to the movable member; and a second coil disposed on the base.

In a specific example (eleventh aspect) of the tenth aspect, the movable member comprises a hammer shank configured to rotate in response to user depression of a key. In other words, the musical instrument according to the eleventh aspect is a keyboard instrument comprising a plurality of keys corresponding to different pitches.

In a specific example (twelfth aspect) of the eleventh aspect, the second coil comprises: a first portion through which a current flows in a first direction; and a second portion through which the current flows in a second direction opposite to the first direction, in which the first portion and the second portion are aligned with each other along an axial direction of the hammer shank. In this aspect, a direction of a magnetic field generated by the first portion of the second coil is opposite to a direction of a magnetic field generated by the second portion of the second coil; thus, it is possible to reduce spread of the magnetic field from the second coil to the surroundings. In addition, the first portion of the second coil and the second portion of the second coil are aligned with each other along the axial direction of the hammer shank; thus, compared to a configuration in which the first portion and the second portion are aligned with each other along a circumferential direction of the hammer shank, it is easy to secure sufficient space to dispose the second coil.

In a specific example (thirteenth aspect) of the eleventh or twelfth aspect, the detectable member further comprises a capacitive element connected to the second coil, and the capacitive element comprises a chip capacitor disposed on a surface of the base such that a longitudinal direction of the capacitive element is along an axial direction of the hammer shank. According to this aspect, it is possible to reduce a possibility of excessive stress generated by curving of the base from acting on the capacitive element.

In a specific example (fourteenth aspect) of the eleventh or twelfth aspect, the detectable member further comprises a first capacitive element and a second capacitive element, and the first capacitive element and the second capacitive element are connected to the second coil and are aligned with, and apart from, each other along a circumferential direction of the hammer shank. In this aspect, the first capacitive element, the second coil, and the second capacitive element are aligned with each other along the longitudinal direction of the hammer shank. Thus, an advantage is obtained in that the detectable member can be readily disposed at the hammer shank.

### Description of Reference Signs

100... musical keyboard instrument, 11... supporting portion, 12, 14... support, 13... string, 20... keyboard mechanism, 21... keyboard, 211... key, 22... strike mechanism, 23... transmission mechanism, 24... hammer, 241... hammer head, 242... hammer shank, 30... detection system, 31... magnetic sensor, 32... drive circuit, 321... supply circuit, 322... output circuit, 40... control system, 41... controller, 42... storage device, 43... AID converter, 44... sound source, 50... sound emitting device, 60... signal generator, 61... active resonant circuit, 70... detectable member, 71... passive resonant circuit, 80... pedal mechanism, 81... pedal.

## Claims

1. A detection system for a musical instrument, the detection system comprising:
a detectable member disposed on a movable member that is configured to be displaced in response to a user operation in playing a piece of music; and
a signal generator including a first coil configured to generate a magnetic field, the signal generator being configured to generate a detection signal dependent on a distance between the detectable member and the first coil,
wherein the detectable member comprises:
a flexible base fixed to the movable member; and
a second coil disposed on the base.

2. The detection system for a musical instrument according to claim 1, wherein the detectable member is disposed on the movable member with the base being curved along a curved surface of the movable member.

3. The detection system for a musical instrument according to claim 1 or 2, wherein the second coil comprises a conductive pattern on a surface of the base.

4. The detection system for a musical instrument according to any one of claims 1 to 3,
wherein the second coil comprises:
a first portion through which a current flows in a first direction; and
a second portion through which the current flows in a second direction opposite to the first direction.

5. The detection system for a musical instrument according to claim 4, wherein the movable member comprises an elongated member, and wherein the first portion and the second portion are aligned with each other along a longitudinal direction of the movable member.

6. The detection system for a musical instrument according to claim 5,
wherein the detectable member further comprises a first capacitive element and a second capacitive element,
wherein the first capacitive element and the second capacitive element are connected to the second coil and are aligned with, and apart from, each other along the longitudinal direction of the movable member, and
wherein the first portion and the second portion are disposed between the first capacitive element and the second capacitive element.

7. The detection system for a musical instrument according to any one of claims 1 to 5,
wherein the detectable member further comprises a capacitive element connected to the second coil, and
wherein the capacitive element has an electrode that comprises a conductive pattern disposed on a surface of the base.

8. The detection system for a musical instrument according to claim 2,
wherein the movable member comprises an elongated member,
wherein the detectable member further comprises a capacitive element connected to the second coil, and
wherein the capacitive element comprises a chip capacitor disposed on a surface of the base such that a longitudinal direction of the capacitive element is along a longitudinal direction of the movable member.

9. The detection system for a musical instrument according to any one of claims 1 to 8, wherein the movable member comprises a hammer shank configured to rotate in response to a user depression of a key.

10. A musical instrument comprising:
a movable member that is configured to be displaced in response to a user operation in playing a piece of music;
a detectable member disposed on the movable member; and
a signal generator including a first coil configured to generate a magnetic field, the signal generator being configured to generate a detection signal dependent on a distance between the detectable member and the first coil,
wherein the detectable member comprises:
a flexible base fixed to the movable member; and
a second coil disposed on the base.

11. The musical instrument according to claim 10, wherein the movable member comprises a hammer shank configured to rotate in response to user depression of a key.

12. The musical instrument according to claim 11,
wherein the second coil comprises:
a first portion through which a current flows in a first direction; and
a second portion through which the current flows in a second direction opposite to the first direction, and
wherein the first portion and the second portion are aligned with each other along an axial direction of the hammer shank.

13. The musical instrument according to claim 11 or 12,
wherein the detectable member further comprises a capacitive element connected to the second coil, and
wherein the capacitive element comprises a chip capacitor disposed on a surface of the base such that a longitudinal direction of the capacitive element is along an axial direction of the hammer shank.

14. The musical instrument according to claim 11 or 12,
wherein the detectable member further comprises a first capacitive element and a second capacitive element, and
wherein the first capacitive element and the second capacitive element are connected to the second coil and are aligned with, and apart from, each other along a circumferential direction of the hammer shank.
